# EUROPÄISCHE PATENTSCHRIFT

(11) **EP 2 148 898 B1**
(45) Veröffentlichungstag und Bekanntmachung des Hinweises auf die Patenterteilung: **22.12.2010**
(21) Anmeldenummer: 08759729.0
(22) Anmeldetag: 19.05.2008
(51) Int. Cl.: C08G 77/388

(54) **VERFAHREN ZUR HERSTELLUNG VON -KETOCARBONYL-FUNKTIONELLEN ORGANOSILICIUMVERBINDUNGEN**
METHOD FOR THE PRODUCTION OF -KETOCARBONYL-FUNCTIONAL ORGANOSILICON COMPOUNDS
PROCÉDÉ DE PRODUCTION DE COMPOSÉS ORGANOSILICIÉS À FONCTION -CÉTOCARBONYLE

(30) Priorität: 23.05.2007 DE 102007023934
(43) Veröffentlichungstag der Anmeldung: 03.02.2010
(73) Patentinhaber: Wacker Chemie AG, 81737 München (DE)
(72) Erfinder: HERZIG, Christian, 83329 Waging (DE)
(74) Vertreter: Deffner-Lehner, Maria
(86) Internationale Anmeldenummer: PCT/EP2008/056102
(87) Internationale Veröffentlichungsnummer: WO 2008/142041

(56) Entgegenhaltungen:
- US-A- 6 121 404

## Beschreibung

Die Erfindung betrifft ein Verfahren zur Herstellung von β-Ketocarbonyl-funktionellen Organosiliciumverbindungen.

In US 4,861,839 werden Alkoxysilane beschrieben, die mit Acetessig(thio)ester- oder Acetessigamidogruppen substituiert sind und als monomere Chelatliganden für Metallkatalysatoren verwendet werden.

Polymere β-Ketoestersiloxane sind aus US 4,808,649 bekannt, ebenso ein Verfahren zu deren Herstellung sowie deren Verwendung als Stabilisator für Polyvinylchlorid.

Funktionelle Polysiloxane, die Acetoacetatgruppen enthalten, werden in US 5,952,443 beschrieben, wobei ein Teil der funktionellen Gruppen mindestens zwei β-Ketocarbonylgruppen pro funktioneller Gruppe enthalten muss und die Anzahl der Dimethylsiloxyeinheiten nicht höher als 50 ist. Weithin ist die Vernetzung mit Polyaminen in Lackformulierungen beschrieben.

Die Modifizierung von Carbinol- oder Aminopolysiloxanen mit Diketen und dessen Derivaten wird in US 6,121,404 beschrieben. Die Produkte werden in wässriger Lösung zusammen mit Aminopolysiloxanen zur Herstellung von Elastomerfilmen verwendet.

Es bestand die Aufgabe ein Verfahren zur Herstellung von β-Ketocarbonyl-funktionellen Organosiliciumverbindungen bereitzustellen, bei dem unvergelte Produkte erhalten werden. Die Aufgabe wird durch die Erfindung gelöst.

Gegenstand der Erfindung ist ein Verfahren zur Herstellung von β-Ketocarbonyl-funktionellen Organosiliciumverbindungen, bei dem Verbindungen (1) eingesetzt werden, die Diketene der allgemeinen Formel 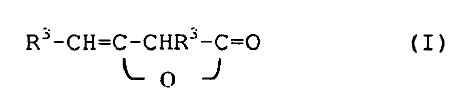 abspalten, wobei
- R³: ein Wasserstoffatom oder einen Kohlenwasserstoffrest mit 1 bis 18 Kohlenstoffatomen, vorzugsweise ein Wasserstoffatom, bedeutet,
welche mit Organosiliciumverbindungen (2), die mindestens einen Si-gebundenen Rest A der allgemeinen Formel

-R¹-NR²₂ (II)

je Molekül enthalten, wobei
- R¹: einen zweiwertigen organischen Rest mit 2 bis 10 Kohlenstoffatomen, der Heteroatome ausgewählt aus der Gruppe von Sauerstoff, Schwefel und Stickstoff enthalten kann, vorzugsweise einen Kohlenwasserstoffrest mit 2 bis 10 Kohlenstoffatomen, bevorzugt 2 bis 4 Kohlenstoffatomen, bedeutet,
- R²: ein Wasserstoffatom oder einen organischen Rest mit 1 bis 100 Kohlenstoffatomen, der Stickstoffatome enthalten kann, vorzugsweise ein Wasserstoffatom oder einen Alkyl-, Cycloalkyl- oder Aminoalkylrest mit 1 bis 30 Kohlenstoffatomen, bedeutet,
mit der Maßgabe, dass der Rest der Formel (II) mindestens eine primäre und gegebenenfalls mindestens eine sekundäre Aminogruppe, vorzugsweise mindestens eine primäre Aminogruppe, aufweist,
in Gegenwart von organischen Verbindungen (3), die die Reaktion von primären oder sekundären Aminogruppen mit β-Ketocarbonylverbindungen verzögern oder verhindern,
umgesetzt werden.

Bevorzugt werden Verbindungen (1) eingesetzt, die Diketen der Formel 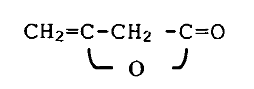 abspalten.

Als Verbindungen (1) können Diketenaddukte mit enolisierbaren Ketoverbindungen, bevorzugt das Diketen-Acetonaddukt (2,2,6-Trimethyl-4-oxo-1,3-dioxin bzw. 2,2,6-Trimethyl-4H-1,3-dioxin-4-on) der Formel 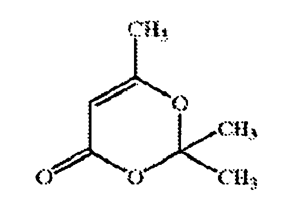 eingesetzt werden. Die Verbindungen (1) sind unter Normalbedingungen hinreichend stabil, unterliegen aber thermischen Zersetzungen, wodurch Diketen wieder freigesetzt wird, das in der Folge mit den Organosiliciumverbindungen (2) umgesetzt wird.

Als Organosiliciumverbindungen (2) können Silane oder oligomere oder polymere Organopolysiloxane eingesetzt werden. Die Organosiliciumverbindungen (2) enthalten vorzugsweise 1 bis 20 000 Si-Atome, bevorzugt 2 bis 5 000 Si-Atome und besonders bevorzugt 60 bis 3000 Si-Atome. Die Organosiliciumverbindungen (2) können linear, verzweigt, dendrimer oder cyclisch sein und können auch polymere organische Gruppen, wie Polyether-Polyester- oder Polyharnstoffgruppen enthalten.

Vorzugsweise werden als Organosiliciumverbindungen (2) Organopolysiloxane aus Einheiten der allgemeinen Formel 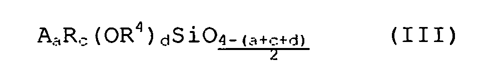 wobei
- A: einen Rest der allgemeinen Formel -R¹-NR²₂ (II) bedeutet, wobei R¹ und R² die oben dafür angegebene Bedeutung haben,
- R: einen einwertigen, gegebenenfalls substituierten Kohlenwasserstoffrest mit 1 bis 18 Kohlenstoffatomen je Rest bedeutet,
- R⁴: ein Wasserstoffatom oder einen Alkylrest mit 1 bis 8 Kohlenstoffatomen, bevorzugt ein Wasserstoffatom oder einen Methyl- oder Ethylrest bedeutet,
- a: 0 oder 1,
- c: 0, 1, 2 oder 3 und
- d: 0 oder 1 ist,
mit der Maßgabe, dass die Summe a+c+d≤3 ist und durchschnittlich mindestens ein Rest A je Molekül enthalten ist,
eingesetzt.

Bevorzugte Beispiele für Organosiliciumverbindungen (2) sind Organopolysiloxane der allgemeinen Formel

A_{g}R_{3-g}SiO(SiR₂O)₁(SiRAO)ₖSiR_{3-g}A_{g} (IVa)

und

(R⁴O)R₂SiO(SiR₂O)ₙ(SiRAO)ₘSiR₂(OR⁴) (IVb)

wobei A, R und R⁴ die oben dafür angegebene Bedeutung haben,
- g: 0 oder 1,
- k: 0 oder eine ganze Zahl von 1 bis 30, bevorzugt 0, ist,
- l: 0 oder eine ganze Zahl von 1 bis 1000, bevorzugt 50 bis 1000, ist,
- m: eine ganze Zahl von 1 bis 30, bevorzugt 1 bis 5, ist und
- n: 0 oder eine ganze Zahl von 1 bis 1000, bevorzugt 50 bis 500, ist,
mit der Maßgabe, dass durchschnittlich mindestens ein Rest A je Molekül enthalten ist.

Weitere Beispiele für Organosiliciumverbindungen (2) sind Organopolysiloxane aus Einheiten der allgemeinen Formel

ASiO_{3/2} (Va)

und

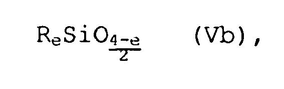

Organopolysiloxane aus Einheiten der allgemeinen Formel

AR₂SiO_{1/2} (Vc)

und 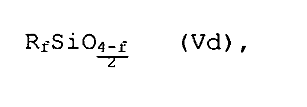 und Organopolysiloxane aus Einheiten der allgemeinen Formel

ARSiO (Ve)

und

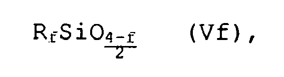

R₂SiO (Vg),

wobei A und R die oben dafür angegebene Bedeutung haben,
- e: 1, 2 oder 3 und
- f: 0 oder 1 ist.

Die bei dem erfindungsgemäßen Verfahren eingesetzten Organosiliciumverbindungen (2) weisen vorzugsweise eine Viskosität von 1 mPa.s bis 1 000 000 mPa.s bei 25°C, bevorzugt 100 mPa.s bis 100 000 mPa.s bei 25°C auf.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste R¹ sind -CH₂CH₂-, -CH(CH₃)-, -CH₂CH₂CH₂-, -CH₂C(CH₃)H-, -CH₂CH₂CH₂CH₂-, -CH₂CH₂CH(CH₃)-, wobei der -CH₂CH₂CH₂-Rest bevorzugt ist.

Beispiele für Kohlenwasserstoffreste R gelten auch für Kohlenwasserstoffreste R².

Weitere Beispiele für R² sind Wasserstoff und N-haltige Reste, wie -CH₂CH₂NH₂, -CH₂CH₂NHCH₃, -CH₂CH₂N(CH₃)₂, -CH₂CH₂CH₂NH₂, -CH₂CH₂CH₂N (CH₃)₂.

Beispiele für Kohlenwasserstoffreste R gelten auch für Kohlenwasserstoffreste R³.

Beispiele für Alkylreste R⁴ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Bevorzugt als Rest A ist der Rest der allgemeinen Formel

-R¹-NH-(CH₂)₂-NH₂ (VIa)

oder

-R¹-NH₂ (VIa'),

wobei R¹ die oben dafür angegebene Bedeutung hat,
besonders bevorzugt als Rest A ist der Rest der Formel

-(CH₂)₃-NH-(CH₂)₂-NH₂ (VIb)

oder

- (CH₂)₃-NH₂ (VIb').

Als organische Verbindungen (3) werden vorzugsweise solche eingesetzt, die mit Aminen mehr oder weniger feste Addukte ergeben. Es kann eine Art von Verbindung (3) oder mehrere Arten von Verbindungen (3) eingesetzt werden. Beispiele für Verbindungen (3) sind Aldehyde und Ketone. Bevorzugte Beispiele sind Aceton, Butanon, Methylisobutylketon und Cyclohexanon.

Bei dem erfindungsgemäßen Verfahren wird vorzugsweise die Organosiliciumverbindung (2) zuerst mit der organischen Verbindung (3) gemischt und dann die Verbindung (1), die das Diketen abspaltet, zugegeben.

Bei dem erfindungsgemäßen Verfahren werden bevorzugt in einer 1. Stufe Organosiliciumverbindungen (2) mit organischen Verbindungen (3) umgesetzt, wobei die Verbindungen (3) Schutzgruppen an den Aminogruppen im Rest A der Formel (II) bilden, und anschließend in einer 2. Stufe werden die in der 1. Stufe erhaltenen Organosiliciumverbindungen (2) mit den geschützten Aminogruppen (Umsetzungsprodukte aus (2) und (3)) mit Diketenen umgesetzt, die thermisch aus den Verbindungen (1) freigesetzt werden.

Bei der Umsetzung mit Diketen spaltet sich die Schutzgruppe überraschenderweise wieder von der Aminogruppe im Rest A der Formel (II) ab.

Werden als Verbindungen (3) Ketone eingesetzt, reagieren diese bevorzugt mit den primären Aminogruppen. Diese Reaktion wird bevorzugt bei 0 bis 90°C, besonders bevorzugt bei 10 bis 60°C ausgeführt, d. h. die 1. Stufe des erfindungsgemäßen Verfahrens wird vorzugsweise bei diesen Temperaturen durchgeführt.

Die Kondensationsreaktion in der 1. Stufe führt zu einem Gleichgewichtszustand, der weit auf der Seite der Umsetzungsprodukte aus (2) und (3) liegt, so dass nur noch sehr wenige primäre Aminogruppen vorhanden sind.

In der 1. Stufe wird als Kondensationsprodukt neben dem Umsetzungsprodukt aus (2) und (3) auch Wasser gebildet, welches zur Regeneration freier Aminogruppen nach Zudosierung von Verbindung (1) wieder benötigt wird. Es wurde gefunden, dass die wenigen im Gleichgewicht vorhandenen Aminogruppen mit Diketen aus Verbindung (1)zu β-Ketoamiden reagieren, worauf sich erneut ein Gleichgewicht einstellt und dadurch laufend geringe Mengen freie Aminogruppen nachgebildet werden. Nebenreaktionen werden durch diese geringen Aminkonzentrationen überraschenderweise fast vollständig vermieden.

Das Kondensationswasser kann im Gemisch belassen werden, reversibel gebunden oder entfernt werden. Wird Wasser reversibel gebunden, muss es nach Dosierung von Diketen durch geeignete Maßnahmen wieder freigesetzt werden. Bei physikalischer Absorption kann dies meist durch Erwärmen bewirkt werden. Wird Wasser aber aus dem Reaktionsgemisch entfernt, muss es nach Dosierung von Verbindung (1) in mindestens gleicher Menge wieder zugesetzt werden, damit der Umsatz von aus Verbindung (1) freigesetztem Diketen mit den Aminogruppen vollständig ablaufen kann.

Das Kondensationswasser kann reversibel an Absorbentien gebunden werden, die Wasser aufnehmen können. Beispiele dafür sind Zeolithe wie so genanntes Molekularsieb mit Porengrößen von 3 oder auch 4 Ä. Außerdem kann Kondensationswasser auch als "Kristallwasser" in wasserfrei eingesetzten anorganischen Salzen wie Natriumsulfat oder Magnesiumsulfat gebunden werden. Reversibel gebundenes Wasser kann durch Erwärmen der Reaktionsmischung auf geeignete Temperatur wieder freigesetzt und damit für die Regenerierung freier primärer oder sekundärer Aminogruppen wieder verfügbar gemacht werden.

Kondensationswasser kann aus dem Reaktionsgemisch vollständig entfernt werden, wenn die Absorbentien z.B. durch Filtration entfernt werden, oder diese Wasser dermaßen stark binden, dass es durch reaktionsverträgliche Methoden nicht mehr freigesetzt werden kann. Bleibende Entfernung von Wasser kann auch durch Vakuum bewirkt werden. In all diesen Fällen ist nach Zugabe von Verbindung (1) auch erneute Zugabe von Wasser erforderlich. Die Dosierung kann schnell, langsam oder auch portionsweise erfolgen.

Die bei dem erfindungsgemäßen Verfahren eingesetzten organischen Verbindungen (3) können im Produkt verbleiben oder auch entfernt werden, beispielsweise durch Destillation unter Vakuum oder durch Extraktion.

Die organische Verbindung (3) wird in Mengen von vorzugsweise mindestens 1 Mol, bevorzugt mindestens 1,5 Mol, insbesondere 1 bis 10 Mol, besonders bevorzugt 1,5 bis 5 Mol, je Mol Aminogruppe (primäre und sekundäre) im Rest A der allgemeinen Formel (II) in der Organosiliciumverbindung (2) eingesetzt.

Bei dem erfindungsgemäßen Verfahren werden Diketen abspaltende Verbindungen (1) in Mengen von vorzugsweise 1,0 bis 2,0 Mol, bevorzugt 1,0 bis 1,7 Mol besonders bevorzugt 1,0 bis 1,5 Mol, je Mol Aminogruppe (primäre und sekundäre) im Rest A der allgemeinen Formel (II) in der Organosiliciumverbindung (2) eingesetzt.

Eine besondere Ausführung der Erfindung ist der gleichmolare Einsatz von Diketen abspaltenden Verbindungen (1) und Aminogruppen.

Das erfindungsgemäße Verfahren wird vorzugsweise bei Temperaturen von 80 bis 180°C, bevorzugt 120 bis 160°C, durchgeführt. Insbesondere wird die 2. Stufe des erfindungsgemäßen Verfahrens bei diesen Temperaturen durchgeführt.

Weiterhin wird das erfindungsgemäße Verfahren vorzugsweise beim Druck der umgebenden Atmosphäre durchgeführt, kann aber auch bei höheren und niedrigeren Drücken durchgeführt werden.

Die nach dem erfindungsgemäßen Verfahren erhaltenen β-Ketocarbonyl-funktionelle Organosiliciumverbindungen enthalten je Molekül vorzugsweise mindestens einen Si-gebundenen Rest B, der eine Gruppe der allgemeinen Formel

-N(-Z)- (VII)

enthält, wobei
- Z: einen Rest der Formel -C(=O)-CHR³-C(=O)-CH₂R³ bedeutet.

Als β-Ketocarbonyl-funktionelle Organosiliciumverbindungen werden bevorzugt solche erhalten, die als Si-gebundene Reste B je Molekül mindestens einen Rest der allgemeinen Formel

-R¹-NH(-Z) (VIII)

oder

-R¹-NH₁₋ₓ(-Z)ₓ-(CH₂)₂-NH(-Z) (IX)

enthalten, wobei Z die oben dafür angegebene Bedeutung hat und
x 0 oder 1 ist,
wobei der Rest der Formel (IX) besonders bevorzugt ist.

Besonders bevorzugt als Rest B ist der Rest der Formel

- (CH₂)₃-NH₁₋ₓ(-Z)ₓ-(CH₂)₂-NH(-Z) (X),

wobei Z die oben dafür angegebene Bedeutung hat.

Gegenstand der Erfindung ist daher ein Verfahren zur Herstellung von β-Ketocarbonyl-funktionellen Organosiliciumverbindungen, die je Molekül mindestens einen Si-gebundenen Rest der allgemeinen Formel

-R¹-NH₁₋ₓ (-Z)ₓ-CH₂CH₂-NH (-Z) (IX)

enthalten, wobei Z die oben dafür angegebene Bedeutung hat und
x 0 oder 1 ist.

Vorzugsweise werden als β-Ketocarbonyl-funktionelle Organosiliciumverbindungen Organopolysiloxane aus Einheiten der allgemeinen Formel 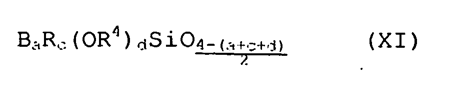 wobei B, R, R⁴, a, c und d die oben dafür angegebene Bedeutung haben,
mit der Maßgabe, dass die Summe aus a+c+d≤3 ist und durchschnittlich mindestens ein Rest B je Molekül enthalten ist,
erhalten.

Bevorzugte Beispiele für β-Ketocarbonyl-funktionelle Organosiliciumverbindungen sind Organopolysiloxane der allgemeinen Formel

B_{g}R_{3-g}SiO (SiR₂O)₁(SiRBO)ₖSiR_{3-g}B_{g} (XIIa)

und

(R⁴O)R₂SiO(SiR₂O)ₙ(SiRBO)ₘSiR₂(OR⁴) (XIIb)

wobei B, R und R⁴ die oben dafür angegebene Bedeutung haben,
- g: 0 oder 1,
- k: 0 oder eine ganze Zahl von 1 bis 30, bevorzugt 0, ist und
- 1: 0 oder eine ganze Zahl von 1 bis 1000, bevorzugt 50 bis 1000, ist,
- m: eine ganze Zahl von 1 bis 30, bevorzugt 1 bis 5, ist und
- n: 0 oder eine ganze Zahl von 1 bis 1000, bevorzugt 50 bis 500, ist,
mit der Maßgabe, dass durchschnittlich mindestens ein Rest B je Molekül enthalten ist.

Weitere Beispiele für β-Ketocarbonyl-funktionelle Organosiliciumverbindungen sind Organopolysiloxane aus Einheiten der allgemeinen Formel

BSiO_{3/2} (XIIIa)

und

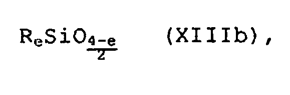

Organopolysiloxane aus Einheiten der allgemeinen Formel

BR₂SiO_{1/2} (XIVa)

und 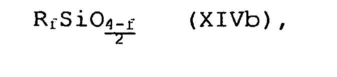 und Organopolysiloxane aus Einheiten der allgemeinen Formel

BRSiO (XVa)

und

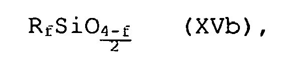

R₂SiO (XVc),

wobei B, R, e und f die oben dafür angegebene Bedeutung haben.

Die bei dem erfindungsgemäßen Verfahren erhaltenen β-Ketocarbonyl-funktionellen Organosiliciumverbindungen weisen vorzugsweise eine Viskosität von 10 mPa.s bis 10 000 000 mPa.s bei 25°C, bevorzugt 100 mPa.s bis 500 000 mPa.s bei 25°C auf.

Die bei dem erfindungsgemäßen Verfahren erhaltenen β-Ketocarbonyl-funktionellen Organosiliciumverbindungen können verwendet werden:
a) zur Fixierung von Siliciumverbindungen / Siloxanen auf aminogruppenhaltigen Oberflächen, die aufgrund der pH-Abhängigkeit steuerbar ist
b) zum Polymeraufbau (linear, verzweigt) mittels aminogruppenhaltigen Reaktionspartnern bis hin zur Vernetzung, wobei sie je nach Funktionsdichte als Vernetzer oder als zu vernetzende Polymere fungieren
c) zur Fixierung auf metallionenhaltigen Substraten, wobei sich die Metallionen unter Chelatbildung an die erfindungsgemäßen Produkte binden, wobei die Bindungsstärke vom Ionentyp abhängt,
d) zur Vernetzung mit Polyacrylaten durch Michaeladdition

### Beispiel 1:

Bei 22°C werden 269 g eines Dimethylpolysiloxans mit 3-(Aminoethylamino)-propylendgruppen und einem Amingehalt von 0,78 mEqu./g mit 24,4 g Aceton gemischt. Nach ca. 4 Stunden erwärmt man den Ansatz auf Rückflusstemperatur und dosiert insgesamt 47,7 g Diketen-Acetonaddukt gleichmäßig und unter gutem Rühren zu. Bei leicht exothermer Reaktion steigt die Viskosität des Aminöls an. Man lässt noch weitere 2 Stunden bei Rückfluss nachreagieren und entfernt das zugesetzte und abgespaltene Aceton im Vakuum bei 70°C. Man erhält nach Filtration über Bentonit ein klares Öl mit der Viskosität 1970 mm²/s (25°C). Das ¹H-NMR-Spektrum zeigt ein Keto/Enolverhältnis des gebildeten β-Ketoamidosiloxans von 4,7 ; der Aminumsatz ist vollständig (> 99%).

### Beispiel 2:

132,5 g eines handelsüblichen Aminosiloxans aus 3-(Aminoethylamino)-propyl-methylsiloxy- und Dimethylsiloxyeinheiten und Methoxyendgruppen, sowie einem Amingehalt von 0,302 mEqu./g bei einer Viskosität von 1130 mm²/s (25°C), werden mit 4,7 g Aceton 4 Stunden bei 25°C gerührt. Danach erfolgt Erwärmung auf 120°C und Zugabe von 9,1g Diketen-Acetonaddukt , worauf eine leichte Temperaturerhöhung einsetzt. Nach weiteren 2 Stunden wird das Aceton bei 70°C im Vakuum entfernt. Man erhält nach Filtration über Bentonit ein klares Öl mit einer Viskosität von 5800 mm²/s (25°C). Im ¹H-NMR-Spektrum ist ein vollständiger Aminumsatz erkennbar. Das β-Ketoamidosiloxan hat ein Keto/Enolverhältnis von 3,7. Die prim. wie auch die sec. Aminogruppen wurden acetoacyliert.

### Vergleichsversuch nach US 6,121,404:

Beispiel 2 wird ohne Zusatz von Aceton, also ohne Verbindung (3) durchgeführt, die auf Aminogruppen konditionierend wirkt. Der Zusatz von Diketen-Acetonaddukt führt ebenso zu exothermer Reaktion, wobei aber die Viskositätszunahme wesentlich kräftiger erfolgt. Nach kurzer Zeit wird der Ansatz inhomogen. Man erhält ein teilvergeltes Produkt, welches nur noch teilweise in Toluol löslich ist. Eine Viskosität ist nicht mehr messbar.

### Beispiel 3:

200 g eines linearen Polydimethylsiloxans mit Aminopropylendgruppen in einer Konzentration von 0,092 mEqu./g und einer Viskosität von 1220 mm²/s (25°C) werden zusammen mit 4,3 g Aceton 3 Stunden bei 25°C gerührt. Nach Erwärmung auf 120°C werden 4,2 g Diketen-Acetonaddukt zudosiert. Man lässt weitere 2 Stunden bei gleicher Temperatur ausreagieren, wonach das Aceton im Vakuum entfernt wird. Nach Filtration über Bentonit erhält man ein klares Öl mit einer Viskosität von 3040 mm²/s (25°C) bei vollständigem Umsatz der Amingruppen.

## Patentansprüche

1. Verfahren zur Herstellung von β-Ketocarbonyl-funktionellen Organosiliciumverbindungen, bei dem Verbindungen (1) eingesetzt werden, die Diketene der allgemeinen Formel 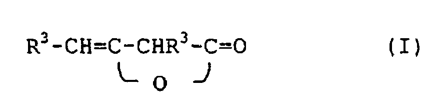 abspalten,
wobei
R³ ein Wasserstoffatom oder einen Kohlenwasserstoffrest mit 1 bis 18 Kohlenstoffatomen bedeutet,
welche mit Organosiliciumverbindungen (2), die mindestens einen Si-gebundenen Rest A der allgemeinen Formel
-R¹-NR²₂ (II)
je Molekül enthalten, wobei
R¹ einen zweiwertigen organischen Rest mit 2 bis 10 Kohlenstoffatomen, der Heteroatome ausgewählt aus der Gruppe von Sauerstoff, Schwefel und Stickstoff enthalten kann, bedeutet,
R² ein Wasserstoffatom oder einen organischen Rest mit 1 bis 100 Kohlenstoffatomen, der Stickstoffatome enthalten kann, bedeutet,
mit der Maßgabe, dass der Rest A der Formel (II) mindestens eine primäre und gegebenenfalls mindestens eine sekundäre Aminogruppe aufweist,
in Gegenwart von organischen Verbindungen (3), die die Reaktion von primären oder sekundären Aminogruppen mit β-Ketocarbonylverbindungen verzögern oder verhindern,
umgesetzt werden.

2. Verfahren nach Anspruch 1, **dadurch gekennzeichnet, dass** als Diketen abspaltende Verbindung (1) das Diketen-Acetonaddukt eingesetzt wird.

3. Verfahren nach Anspruch 1 oder 2, **dadurch gekennzeichnet, dass** in einer 1. Stufe
Organosiliciumverbindungen (2) gemäß Anspruch 1 mit organischen Verbindungen (3) gemäß Anspruch 1, umgesetzt werden,
und in einer 2. Stufe
Diketene abspaltende Verbindungen (1) gemäß Anspruch 1 zu den in der 1. Stufe erhaltenen Umsetzungsprodukten aus (2) und (3) zugegeben werden.

4. Verfahren nach Anspruch 3, **dadurch gekennzeichnet, dass** das in der 1. Stufe bei der Kondensation freiwerdende Wasser reversibel gebunden wird und nach Zugabe von Diketen abspaltenden Verbindungen (1) wieder freigesetzt wird.

5. Verfahren nach Anspruch 3, **dadurch gekennzeichnet, dass** das in der 1. Stufe bei der Kondensation freiwerdende Wasser aus dem Reaktionsgemisch entfernt wird und nach Zugabe von Diketen abspaltenden Verbindungen (1) wieder zugegeben wird.

6. Verfahren nach einem der Ansprüche 1 bis 5, **dadurch gekennzeichnet, dass** als organische Verbindungen (3) Aldehyde oder Ketone eingesetzt werden.

7. Verfahren nach einem der Ansprüche 1 bis 6, **dadurch gekennzeichnet, dass** als organische Verbindungen (3) solche ausgewählt aus der Gruppe von Aceton, Butanon, Methylisobutylketon und Cyclohexanon eingesetzt werden.

8. Verfahren nach einem der Ansprüche 1 bis 7, **dadurch gekennzeichnet, dass** die organische Verbindung (3) in Mengen von mindestens 1 Mol je Mol Aminogruppe (primäre und sekundäre) im Rest A der allgemeinen Formel (II) in der Organosiliciumverbindung (2) eingesetzt wird.

9. Verfahren nach einem der Ansprüche 1 bis 8, **dadurch gekennzeichnet, dass** Diketen abspaltende Verbindungen (1) in Mengen von 1,0 bis 2,0 Mol je Mol Aminogruppe (primäre und sekundäre) im Rest A der allgemeinen Formel (II) in der Organosiliciumverbindung (2) eingesetzt werden.

10. Verfahren nach einem der Ansprüche 1 bis 9, **dadurch gekennzeichnet, dass** das Verfahren bei einer Temperatur von 80°C bis 180°C durchgeführt wird.

11. Verfahren nach einem der Ansprüche 1 bis 10, **dadurch gekennzeichnet, dass** der Rest A ein Rest der Formel
-R¹-NH- (CH₂)₂-NH₂ (VIa)
oder
-R¹-NH₂ (VIa')
ist, wobei R¹ die in Anspruch 1 dafür angegebene Bedeutung hat.

## Claims

1. A process for preparing β-ketocarbonyl-functional organosilicon compounds using compounds (1) which eliminate diketenes of the general formula 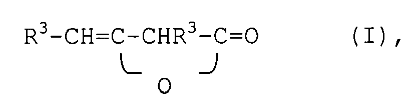 where
R³ is a hydrogen atom or a hydrocarbon radical having from 1 to 18 carbon atoms,
which are reacted with organosilicon compounds (2) which contain at least one Si-bonded radical A of the general formula
-R¹-NR²₂ (II)
per molecule, where
R¹ is a divalent organic radical which has from 2 to 10 carbon atoms and may contain heteroatoms selected from the group consisting of oxygen, sulfur and nitrogen,
R² is a hydrogen atom or an organic radical which has from 1 to 100 carbon atoms and may contain nitrogen atoms,
with the proviso that the radical A of the formula (II) has at least one primary amino group and, if appropriate, at least one secondary amino group, in the presence of organic compounds (3) which retard or prevent the reaction of primary or secondary amino groups with β-ketocarbonyl compounds.

2. The process as claimed in claim 1, **characterized in that** the diketene-acetone adduct is used as compound (1) which eliminates diketene.

3. The process as claimed in claim 1 or 2, **characterized in that**
organosilicon compounds (2) according to claim 1 are reacted with organic compounds (3) according to claim 1 in a 1^{st} stage,
and
compounds (1) which eliminate diketenes according to claim 1 are added to the reaction products of (2) and (3) obtained in the 1^{st} stage in a 2^{nd} stage.

4. The process as claimed in claim 3, **characterized in that** the water liberated in the condensation in the 1st stage is bound reversibly and set free again after addition of compounds (1) which eliminate diketene.

5. The process as claimed in claim 3, **characterized in that** the water liberated in the condensation in the 1^{st} stage is removed from the reaction mixture and is added again after addition of compounds (1) which eliminate diketene.

6. The process as claimed in any of claims 1 to 5, **characterized in that** aldehydes or ketones are used as organic compounds (3).

7. The process as claimed in any of claims 1 to 6, **characterized in that** compounds selected from the group consisting of acetone, butanone, methyl isobutyl ketone and cyclohexanone are used as organic compounds (3).

8. The process as claimed in any of claims 1 to 7, **characterized in that** the organic compound (3) is used in amounts of at least 1 mol per mol of amino group (primary and secondary) in the radical A of the general formula (II) in the organosilicon compound (2).

9. The process as claimed in any of claims 1 to 8, **characterized in that** compounds (1) which eliminate diketene are used in amounts of from 1.0 to 2.0 mol per mol of amino group (primary and secondary) in the radical A of the general formula (II) in the organosilicon compound (2).

10. The process as claimed in any of claims 1 to 9, **characterized in that** the process is carried out at a temperature of from 80°C to 180°C.

11. The process as claimed in any of claims 1 to 10, **characterized in that** the radical A is a radical of the formula
-R¹-NH-(CH₂)₂-NH₂ (VIa)
or
-R¹-NH₂ (VIa')
where R¹ is as defined in claim 1.

## Revendications

1. Procédé pour la préparation de composés organosiliciés à fonction β-cétocarbonyle, dans lequel on utilise des composés (1) qui libèrent des dicétènes de formule générale 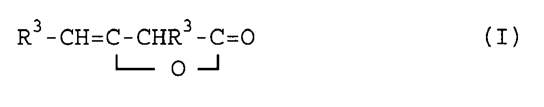 dans laquelle
R³ représente un atome d'hydrogène ou un radical hydrocarboné ayant de 1 à 18 atomes de carbone,
qui sont mis en réaction avec des composés organosiliciés (2) qui contiennent par molécule au moins un radical A lié au silicium, de formule générale
-R¹-NR²₂ (II),
dans laquelle
R¹ représente un radical organique divalent ayant de 2 à 10 atomes de carbone, qui peut contenir des hétéroatomes choisis dans le groupe constitué par l'oxygène, le soufre et l'azote,
R² représente un atome d'hydrogène ou un radical organique ayant de 1 à 100 atomes de carbone, qui peut contenir des atomes d'azote,
étant entendu que le radical A de formule (II) comporte au moins un groupe amino primaire et éventuellement au moins un groupe amino secondaire,
en présence de composés organiques (3) qui ralentissent ou empêchent la réaction de groupes amino primaires ou secondaires avec des composés β-cétocarbonyle.

2. Procédé selon la revendication 1, **caractérisé en ce qu'**on utilise comme composé (1) libérant un dicétène l'adduit dicétène-acétone.

3. Procédé selon la revendication 1 ou 2, **caractérisé en ce que** dans une première étape on fait réagir des composés organosiliciés (2) selon la revendication 1
avec des composés organiques (3) selon la revendication 1,
et dans une deuxième étape
on ajoute des composés (1) libérant des dicétènes selon la revendication 1, aux produits de réaction de (2) et (3) obtenus dans la première étape.

4. Procédé selon la revendication 3, **caractérisé en ce que** l'eau libérée lors de la condensation dans la première étape est réversiblement liée et, après addition de composés (1) libérant des dicétènes, est de nouveau libérée.

5. Procédé selon la revendication 3, **caractérisé en ce que** l'eau libérée lors de la condensation dans la première étape est éliminée du mélange réactionnel et, après addition de composés (1) libérant des dicétènes, est de nouveau ajoutée.

6. Procédé selon l'une quelconque des revendications 1 à 5, **caractérisé en ce qu'**en tant que composés organiques (3) on utilise des aldéhydes ou des cétones.

7. Procédé selon l'une quelconque des revendications 1 à 6, **caractérisé en ce qu'**en tant que composés organiques (3) on utilise ceux choisis dans le groupe constitué par l'acétone, la butanone, la méthylisobutylcétone et la cyclohexanone.

8. Procédé selon l'une quelconque des revendications 1 à 7, **caractérisé en ce qu'**on utilise le composé organique (3) en quantités d'au moins 1 mole par mole de groupe amino (primaire et secondaire) dans le radical A de formule générale (II) dans le composé organosilicié (2).

9. Procédé selon l'une quelconque des revendications 1 à 8, **caractérisé en ce qu'**on utilise des composés (1) libérant des dicétènes, en quantités de 1,0 à 2,0 moles par mole de groupe amino (primaire et secondaire) dans le radical A de formule générale (II) dans le composé organosilicié (2).

10. Procédé selon l'une quelconque des revendications 1 à 9, **caractérisé en ce que** le procédé est effectué à une température de 80 °C à 180 °C.

11. Procédé selon l'une quelconque des revendications 1 à 10, **caractérisé en ce que** le radical A est un radical de formule
-R¹-NH-(CH₂)₂-NH₂ (VIa)
ou
-R¹-NH₂ (VIa')
R¹ ayant la signification donnée dans la revendication 1.
